# EUROPEAN PATENT APPLICATION

(11) **EP 1 619 521 A1**
(43) Date of publication of application: **25.01.2006**
(21) Application number: 04103521.3
(22) Date of filing: 22.07.2004
(51) Int. Cl.: G01V 3/08

(54) **Capacitive transmitter electrode**

(71) Applicant: IEE INTERNATIONAL ELECTRONICS & ENGINEERING S.A., 6468 Echternach (LU)
(72) Inventor: Clos, Harald, 66113, Saarbrücken (DE); Petereit, Andreas, 54338, SCHWEICH (DE); Schleeh, Thomas, 54293, TRIER (DE); Wendt, Christoph, 54292, TRIER (DE)
(74) Representative: Beissel, Jean

(57) **Abstract**

A transmitter electrode for a capacitive sensing device comprises a conductive sheet material, said conductive sheet material having an outline defining the sen sing area of said transmitter electrode. According to the present invention, said conductive sheet material comprises at least one cut-out, said cut-out being arranged within said sensing area of said transmitter electrode.

## Description

### Technical field

The present invention generally relates to a transmitter electrode for a capacitive sensing device e.g. of a safety device in an automotive vehicle.

### Background Art

In order to protect the lives of passengers during a traffic accident, modern vehicles are generally provided with a protection system comprising several ai r-bags and seat belt pretensioners, which are used to absorb the energy of a passenger released during the collision due to the accident. It is clear that such protection systems are most effective when they are well adapted to the specific requirements of an actual seat occupancy. That is why microprocessor-controlled protection systems have been designed which provide several operational modes, allowing for example an adaptation of the instant at which airbags are deployed, the volume to which the airbags are inflated, the instant at which safety belts are released after the collision, etc, as a function of the stature of a passenger on the seat. In order to enable the control microprocessor to select the optimum operational mode for a given seat occupancy status, it is of course necessary to detect one or several parameters characterizing the occupancy status of the seat and to classify the occupancy into one of several classes, each of which is associated to a specific operational mode of the restraint system.

One approach for gathering relevant parameters of a seat occupancy is based on the detection of the capacitive coupling of a body to one or several electrodes arranged in the seat. Such a measurement system is for instance described in LU-A-88 828. This measurement system comprises at least one transmitting electrode and at least one receiving electrode that are capacitively coupled by a conductive body. The receiving electrodes are connected to an analysis circuit that determines the capacitive coupling of the transmitting antenna with the conductive body by comparing the measured signal with a reference signal.

Various other systems have been disclosed with electrodes arranged at different locations in the passenger compartment in order to detect the presence and/or the nature of a seat occupancy and to classify the occupancy status in one of several classes. German patent application DE-A-1 0 325 881 discloses e.g. a combined occupant detection system comprising a first transmitter electrode arranged in a seating surface of a vehicle seat and a second transmitter electrode arranged in the foot compartment of the vehicle. The comb ined detection system can further comprise a pressure sensitive mat to be arranged together with the second electrode into the foot compartment.

The transmitter electrodes of the above described capacitive sensing devices usually comprise a simple conductive sheet material, the outer shape of which is adapted to the location, in which the electrode is to be arranged. In the case of a transmitter electrode arranged in the foot compartment of a vehicle, the outer shape of the electrode is accordingly determined by the configuration of the foot area of the vehicle compartment. In order to ensure a reliable detection of a body part or an object at any location in the foot compartment of the vehicle, the sensing area of the electrode preferably extends over the entire area of the foot compartment. It follows that the capacitive transmitter electrode has a large area and as a consequence the capacitance of the capacitor formed by the transmitter electrode and the vehicle floor is very high.

The electronic sensing unit, which is used for operating the transmitter electrode, accordingly needs to have a high driver capacity. Large driver capacities however require big electronic units, which are difficult to integrate into the limited integration space in the vehicle, e.g. in the vehicle seat.

### Technical problem

It is an object of the present invention to provide an improved transmitter electrode for a capacitive sensing device. This object is achieved by a transmitter electrode as claimed in claim 1.

### General Description of the Invention

A transmitter electrode for a capacitive sensing device comprises a conductive sheet material, said conductive sheet material having an outline defining the sensing area of said transmitter electrode. According to the present invention, said conductive sheet material comprises at least one cut-out, said cut-out being arranged within said sensing area of said transmitter electrode. The cut-out arranged within the sensing area of the electrode reduces the electrode surface and accordingly also reduces the capacitance of the capacitor formed together with the vehicle floor. In fact, the capacitor formed by the transmitter electrode and the vehicle floor can be considered as a plate capacitor so that the capacitance of the formed capacitor is substantially proportional to the area of the transmitter electrode. By providing at least one cut-out within the sensing area, the effective area of the transmitter electrode and consequently the resulting capacitance is reduced.

The lower electrode surface thus requires less driver capacity from the electronic sensing unit. The reduced driver capacity requirement allows the development of electronics with reduced weight and smaller dimensions, which accordingly may be easier integrated into the usually limited integration space e.g. in a vehicle seat. Furthermore due to the reduced capacity of the electronics, the electronic sensing unit can be manufactured at reduced costs. Finally the lower electrode surface leads to a reduced consumption of conductive material in the manufacturing process of the electrode which means that the transmitter electrode itself is also less expensive.

It will be noted that the provision of at least one cut-out and the corresponding reduction of the effective electrode surface does not necessarily reduce the electrodes sensitivity. In fact, the objects to be detected by the sensing devices are located at a certain distance from the transmitter electrode. At a certain distance from the transmitter electrode, the electrical field of the transmitter electrode is mainly determined by the overall size of the electrode. This electrical field is not substantially altered by the provision of cut-outs in the conductive material, as long as the size of the cut-outs does not exceed a certain value. In a preferred embodiment of the invention, the size of said cut-outs is therefore e.g. smaller than a contact surface of an object to be detected by said transmitter electrode. On the other hand it may be desirable to exclude some objects from the detection by the transmitter electrode. Some auxiliary child seats include e.g. a support, which in use is arranged in the foot compartment of the vehicle. In this case, it could be advantageous if the size of said cut-outs is larger than a contact surface of an object to be excluded from the detection by said transmitter electrode.

In view of a suitable sensitivity of the transmitter electrode, the size of the individual cut-out is limited by the size of the objects to be detected. In a preferred embodiment of the invention, the conductive sheet material therefore comprises a plurality of cut-outs, said cut-outs being arranged within said sensing area of said transmitter electrode. The provision of a plurality of cut-outs allows to considerably reduce the actual surface of the transmitter electrode while at the same time ensuring that the size of the individual cut-outs does not exceed a predetermined threshold value determined by the size of the objects to be detected. Thus the required driver capacity is considerably lowered while the sensitivity of the electrode is maintained. In this context, it should be noted that for the same overall surface of the cut-outs, a high number of small cut-outs may lead to an electrode with a higher sensibility than a small number of larger cut-outs.

The specific arrangement of the different cut-outs in the sensing area of the transmitter electrode is adapted to ensure a predetermined sensitivity of the transmitter electrode. This sensitivity may be infl uenced by the distribution and/or the configuration of the different cut-outs of the electrode. The choice for a specific configuration and distribution will be influenced by various parameters such as the configuration of the sensing location, the size of the objects to be determined, the distance at which the object is to be detected etc. Depending on the specific requirements of the sensing function, the cut-outs may therefore be arranged in a regular distribution or in an irregular distribution, and/or the cut-outs may have similar shapes or at least two of said cut-outs may have different shapes. Similarly e cut-outs may have a similar size or at least two of said cut-outs may have a different size. It will be noted that a shape of said cut-outs and/or a size of said cut-outs and/or a distribution of said cut-outs is adapted for locally tuning the sensitivity of said transmitter electrode.

It will be appreciated, that the transmitter electrode may be formed from any suitable conductive sheet material such as e.g. a metal foil like a cupper sheet or an electroconductive textile material (such as a metallized textile material or textile made from conductive fibers). In a preferred embodiment, the conductive sheet material may simply comprise an electroconductive coating, which is applied to a surface of a flexible carrier layer. In this embodiment, the cut-outs of the transmitter electrode are preferably formed by non-coated areas of the carrier layer. This embodiment allows an economical manufacture of the transmitter electrodes. In order to reduce the weight of the transmitter electrode, cut-outs may also be stamped out of the carrier layer in the non-coated regions of thereof. These openings are preferably slightly smaller than the cut-outs in the conductive sheet material. Alternatively, the cut-outs may be stamped out of the coated carrier layer.

The electroconductive coating, i.e. the conductive sheet material, may also be applied onto the carrier layer in a screen-printing process. Such a screen-printing process enables the printing of electroconductive inks (e.g. graphite or metals such as silver or metal oxides) with a high resolution in every possible complex pattern. It follows that any possible distribution of the plurality of cut-outs and any possible shape of the individual cut-outs is easily obtained by such a printing process.

In use, the above described transmitter electrodes are arranged in a suitable location of an automotive vehicle, e.g. in the vehicle seat or in the floor ca r-pet. In order to ensure a reliable position detection of an object, the arrangement must be such that the electrode is precisely arranged at a predefined location. In the case of a transmitter electrode to be arranged in the foot compartment of a vehicle, the transmitter electrode is therefore preferably foamed into the carpet floor, so that the electrode is securely maintained at the predetermined location.

The carpet structure generally comprises an upper carpet laminate and a lower foam backing. In order to integrate a transmitter electrode into such a carpet structure, the transmitter electrode is secured to the lower surface of the upper carpet laminate e.g. by means of an adhesive tape or Velcro fasteners or the like. Once the transmitter electrode is arranged at the predetermined location, a rear backing layer is applied onto the rear surface of the upper carpet laminate by a foaming process. The foam backing thus tightly encases the transmitter electrode so that the transmitter electrode will be integrated in an entirely protected location.

As already discussed above, the transmitter electrode may have a very large area. Despite the fact that the electrode has been foamed in it can therefore not be excluded that relative motion of the carpet against the transmitter electrode leads to de-lamination of the product during transport. It will be appreciated, that with the electrode of the present invention, the provision of cut-outs in the conductive sheet material reduces this risk of de-lamination of the product. In fact, the foam may penetrate through the cut-outs, thus ensuring a very reliable fixation of the transmitter electrode to the upper carpet laminate. This reduces the possibility of relative motion between carpet and floor electrode.

The reduced floor electrode area further allows the use of less and/or less expensive assembly aids for the production of the floor carpet. Due to the lower weight of the transmitter electrode number of adhesive tape patches may be reduced with respect to a standard transmitter electrode. Furthermore no expensive material and process development is required for improving the adhesive to avoid relative motion between carpet and floor electrode. It follows that besides the electrical advantages for the electronic sensing unit, the transmitter electrode of the present invention also confers a number of mechanical advantages for the integration of the electrode in its respective sensing location.

In a further possible embodiment, said conductive sheet material comprises at least first and second connecti ng points for connecting the electrode to an electronic sensing unit, said second connecting point being arranged at a certain distance from said first connecting point so that said conductive sheet material forms a conductive path between said first and second connecting point. This embodiment enables to check the integrity of the transmitter electrode and the connection lines used to connect the transmitter electrode to the electronic sensing unit. In fact, by measuring the resistance between the two connecting points, the integrity of the conductive path between the two connecting points can be checked. In a preferred embodiment of this variant, said conductive sheet material comprises at least one incision, said at least one incision extending between said first and second connecting point from a border of said sheet material towards the interior of said sheet material. The incision, which may e.g. interconnect some of the cut-outs in the sheet material, enables to shape the conductive path between the first and the second connecting point and to increase its effective length. By providing a plurality of incisions, the conductive path may be shaped so as to m e-ander between the two connecting points, thus enabling to reliably test substa n-tially the entire surface of the transmitter electrode.

It will be noted, that in a possible embodiment, one or more of the cut-outs may extend into the outline of the conductive sheet material. If these cut-outs are suitably arranged in such an embodiment, the conductive sheet material may take the form of a meandering conductive path. It follows that the cut-outs of such an embodiment also fulfil the function of electrically separate possible first and second connecting points.

### Brief Description of the Drawings

Preferred embodiments of the invention will now be described, by way of example, with reference to the accompanying drawings in which:
Fig. 1 is a plan view of an embodiment of a transmitter electrode, wherein different cut-outs are arranged in a regular distribution;
Fig. 2 is a plan view of an embodiment of a transmitter electrode, wherein different cut-outs are arranged in a different distribution;
Fig. 3 is a plan view of an embodiment of a transmitter electrode, wherein different cut-outs are arranged in a irregular distribution;
Fig. 4 is a plan view of an embodiment of a transmitter electrode, wherein the cut-outs have different shapes;
Fig. 5 is a plan view of a further embodiment of a transmitter electrode.

### Description of PreferrecEmbodiments

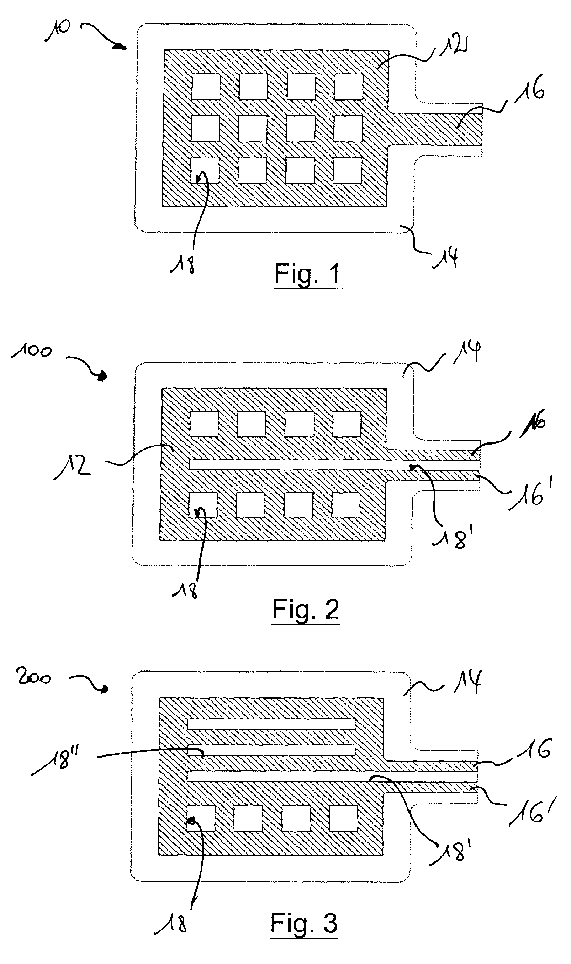

Fig. 1 shows a first embodiment of a transmitter electrode 10 for a capacitive sensing system. The transmitter electrode 10 comprises a conductivesheet material 12, which may be appliedto a carrier foil 14 made of a suitable dielectric material, such as a PET foil. Transmitter electrode 10 further comprisesa first connecting point 16, for connectingthe transmitter electrode 10 toan electronic sensing unit (not shown). The conductive sheet material may e.g. comprise a metal foil or conductive coating applied to the carrier foil. The conductive coating may comprise a metal or another suitable conductive material such as graphite or the like.

In accordance with one embodiment of the present invention, the conductive sheet material 12 comprises a pluralityof cut-outs 18, which are arranged within a sensing area of the transmitter electrode. The sensing area of the electrode is e.g. defined by the outer border of the conductive sheetmaterial 12. In the shown embodiment, the different cut-outs 18 have a similarshape and are arranged in a regular distribution within the sensing area of the transmitter electrode.

The size of the cut-outs is small compared to the overall size of the transmitter electrode. This ensures that the sensibility of the transmitter electrode for detection of objects at a certain distance is not substantially reduced.

A different embodiment of a transmitter electrode 100 is shown in Fig. 2. In this embodiment, one of the cut-outs 18' comprises an shape, which isdifferent from the shape of the other cut-outs 18. As represented,the cut-out 18' maycom-prise an elongate shape and extends from the border of the conductive sheet material 12 inside the sensing areaof the electrode 100. The configuration and the arrangement of the shown cut-out 18'is such, that the transmitter electrode100 comprises two connectingpoints 16 and 16'. Ifeach of the connectingpoints 16 and 16' of the transmitterelectrode 100 is individually connected to theelectronic sensing unit, integrity of the transmitter electrode may be checked by monitoring the electrical resistance betweerthe two connecting points 16 and 16'.

Fig. 3 shows an embodiment of a transmitter electrode 200 with different cut-outs 18, 18' and 18" having differenshapes and sizes. The cut-outs shown in this embodiment are arranged in a distribution, which is asymmetric with respect to a centre line of the transmitter electrode. Such an arrangement of the cut-outs 18, 18' and 18" of the transmitter electrode may be used for locally tuning thesensitivity of the transmitter electrode 200.

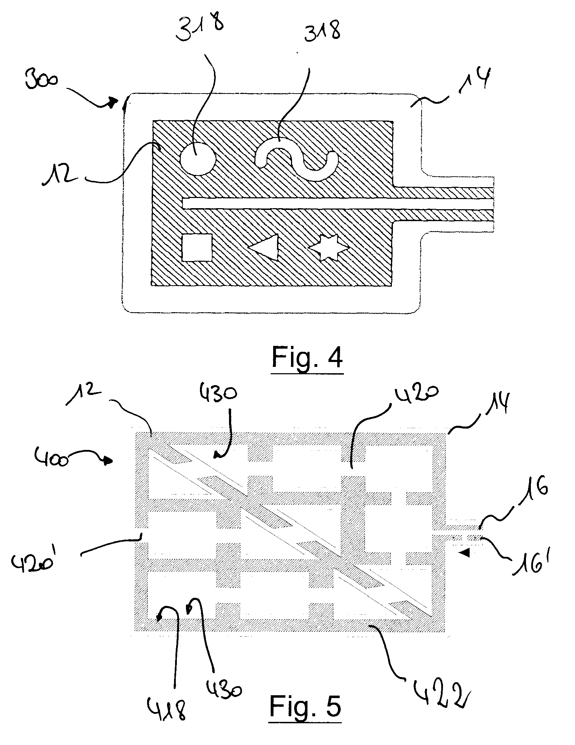

The embodiment of the transmitter electrode 300 shown in Fig. 4 illustrates in addition to different rectangular cut-outs a selection of possible non-rectangular shapes for the cut-outs 318.

Fig. 5 shows an embodiment of a transmitter electrode 400, in which several cut-outs 418 are interconnected by an incision or gap 420and 420'. The cut-outs 418 and the incisions 420 and 420' are arranged so that aconductive path 422, which is formed by the conductive sheet material 12 and which connects the connecting points 16 and 16',comprises a meandering shape.Due to the meandering shape, the conductive path may be configured to extend to every region of the conductive sheet material, thus enabling an optimization of the monitorable area of the transmitter electrode. Fig. 5 further shows that carrierlayer 14 also comprises cut-outs 430. These cut-outs 430 may advantageously improve the fixation of the transmitter electrode 400 in a vehicle floor carpet.

### Listing of Reference Numerals

- 10, 100, 200, 300, 400: transmitter electrode
- 12: conductive sheet material
- 14: carrier foil
- 16, 16 ': connecting points
- 18,18',18"318, 418: cut-outs
- 420, 420': incision or gap
- 422: conductive path
- 430: cut-outs in carrier layer

## Claims

1. A transmitter electrode for a capacitive sensing device, comprising a conductive sheet material, said conductive sheet material having an outline defining the sensing area of said transmitter electrode;
**characterized in that** said conductive sheet material comprises at least one cut-out, said cut-out being arranged within said sensing area of said transmitter electrode.

2. The transmitter electrode as claimed in claim 1, wherein said conductivesheet material comprises a plurality of cut-outs, said cut-outs being arranged within said sensing area of said transmitter electrode.

3. The transmitter electrode as claimed in claim 2, wherein said cut-outs are arranged in a regular distribution.

4. The transmitter electrode as claimed in claim 2, wherein said cut-outs are arranged in an irregular distribution.

5. The transmitter electrode as claimed in any one of claims 2 to 4, wherein said cut-outs have similar shapes.

6. The transmitter electrode as claimed in any one of claims 2 to 4, wherein at least two of said cut-outs have different shapes.

7. The transmitter electrode as claimed in any one of claims 2 to 6, wherein said cut-outs have a similar size.

8. The transmitter electrode as claimed in any one of claims 2 to 6, wherein at least two of said cut-outs have a different size.

9. The transmitter electrode as claimed in any one of the preceding claims, wherein the size of said cut-outs is smaller than a contact surface of an object to be detected by said transmitter electrode.

10. The transmitter electrode as claimed in any one of the preceding claims, wherein the size of said cut-outs is larger than a contact surface of an object to be excluded from the detection by said transmitter electrode.

11. The transmitter electrode as claimed in any one of the preceding claims, wherein a shape of said cut-outs and/or a size of said cut-outs and/or a distribution of said cut-outs is adapted for locally tuning the sensitivity of said transmitter electrode.

12. The transmitter electrode as claimed in any one of the preceding claims, wherein said cut-out extends into the outline of the conductive sheet material.

13. The transmitter electrode as claimed in any one of the preceding claims, wherein said conductive sheet material comprises at least first and second connecting points for connecting the electrode to an electronic sensing unit, said second connecting point being arranged at a certain di stance from said first connecting point so that said conductive sheet material forms a conductive path between said first and second connecting point.

14. The transmitter electrode as claimed in claim 13, wherein saidconductive sheet material comprises at least one incision, said at least one incision extending between said first and second connecting point from a border of said sheet material towards the interior of said sheet material.
